# EUROPEAN PATENT SPECIFICATION

(11) **EP 3 188 992 B1**
(45) Date of publication and mention of the grant of the patent: **25.07.2018**
(21) Application number: 15771008.8
(22) Date of filing: 19.08.2015
(51) Int. Cl.: B65G 59/10, B65G 59/06

(54) **DISPENSING DEVICE**
SPENDERVORRICHTUNG
DISPOSITIF DE DISTRIBUTION

(30) Priority: 04.09.2014 DK 201400499; 17.09.2014 DK 201400526
(43) Date of publication of application: 12.07.2017
(73) Proprietor: Intech International A/S, 9700 Brønderslev (DK)
(72) Inventor: TRUDSLEV, Carsten, DK-9700 Brønderslev (DK)
(74) Representative: Kancelaria Eupatent.pl Sp. z.o.o
(86) International application number: PCT/DK2015/050246
(87) International publication number: WO 2016/034179

(56) References cited:
- DK-B1- 177 779
- JP-U- S 573 733
- US-A- 3 741 410

## Description

The invention relates to a dispensing device for dispensing of trays according to claim 1. From US3741410 is known a dispensing unit of the in the introduction stated kind. The dispensing unit handles a stack of containers, which has each got an outwards protruding rim. The dispensing unit includes a first rotor, which the edge of the lowermost container has mesh with and another rotor, which separates the lowermost container from the stack of containers.
The other rotor is connected to the first rotor and has limited movement in relation to the first rotor. The other rotor is arranged such that it can tilt in relation to the first rotor. Furthermore, the device includes weight relieving items. The device consists of many components for handling the stacked containers.
From international patent application publication WO2005044703 is known a dispensing device for dispensing of stacked elements, where the dispensing device includes at least one dispensing unit with a first and other support element, which supports adjacent placed stacked elements, such that the first support element releases, meaning dispensing a first stacked element, while the other support element still secures another stacked element.

It has been found, however, that there are some drawbacks of this known technique, namely that there in connection with the tray separation step of this dispensing process, when the other support element must find mesh with the tray stack between the two mentioned elements (meaning trays), is insufficient distance between the trays.
The primary reason for this is elastic deformation of the lowermost trays in the tray stack, which occurs when the easily deformable trays are exposed to the weight of the whole tray stack, which can typically weigh up to 5 kg. The elastic deformation of the lowermost trays results in that the dispensing process is made difficult, delayed, is rendered totally impossible and / or requires operator action. Furthermore, the mentioned constructions are not suited for dispensing tray stacks, where the edge of these is placed very closely together and it is therefore difficult for the tray reliever to get contact against an edge.

In prior art document DK177779 B1 a technical solution is disclosed, in which the separator and the lifting device are fixed to each other by way of a common shaft. The lifting effect is performed through the ration of the main rotational shaft, on which an inclined disc acts a rotating eccentric sliding against trays to lift them up. This prior art solution does not always function properly, and an alternative solution is desired, which does not involve the risk of sometimes chorusing the stack of trays during rotation of an inclined disc. DK177779 B1 discloses actually the preamble of claim 1.

It is an object of the invention to show a dispensing device without the above mentioned drawbacks or at least provide useful alternative.

This is achieved with a dispensing device according to claim 1. According to the invention the load alleviation unit includes, in the area opposite the first surface, a protruding pin, which protruding pin goes in mesh with an around going track placed in a center part of the dispensing unit, and the track includes slanted parts in relation to the axle's center line, which center part rotates with the axle's rotation, by which rotation the first end takes two outer positions: a first position and another position.
This is a simple way of providing the translational movement of the load alleviation unit and thus that it is synchronized with the additional parts of the dispensing unit. The rotating movement, which controls the tray divider, thus also controls the load alleviation unit, but by the rotating movement here being converted to a linear movement.
The dispensing device with the load alleviation unit, according to the invention, ensures that an uppermost and typically significant part of the tray stack under the dispensing process is briefly lifted in relation to the lowermost part of the tray stack, from which the dispensing occurs. This results in that the lowermost part of the tray stack and especially the two lowermost trays in it are not exposed to the weight of the whole tray stack, but only to the weight of the lowermost and smaller part of the tray stack, and are subsequently not deformed. In this way it thus becomes possible to avoid the unwanted deformation of the lowermost trays and the dispensing process can occur without the mentioned problem types.

The tray divider's function includes that the tray divider interacts with a next to lowermost tray in the tray stack such that the tray divider goes in mesh with the next to lowermost tray's edge.

During the tray divider's interaction with the tray stack, the next to lowermost tray in the dispensing direction is held back and subsequently the on top resting trays in the tray stack likewise. In this position, the lowermost tray will, meaning the tray "under" the tray divider, not be supported, neither by the distance giver, and can therefore be dispensed from the tray stack, either solely by gravity or forced downwards by a distance giver.

When the tray divider similarly does not interact with the tray, the tray stack will appropriately rest on a distance giver's edge. It is hereby ensured that there is not erroneously dispensed a large number of trays in a single process step.

The load alleviation unit's interaction with the tray stack occurs by the load alleviation unit's first surface going in mesh with a tray higher up in the tray stack than the tray divider. This occurs when the load alleviation unit is positioned in its one outer position, namely the one which is provided by the first surface being in movement away from the dispensing direction and reaches a top point / an outer position.

The load alleviation unit's interaction with the tray stack is initiated when the first surface goes in mesh with the mentioned tray in the tray stack, primarily by going in mesh with an edge on the tray.

The load alleviation unit is a slanted unit, which includes the first surface, which is placed on and consists the load alleviation unit's "highest" point. Thereby, the load alleviation unit gets not only a support function, but also a lifting and load alleviation function. It is thus the slanting of the whole or parts of the load alleviation unit (namely the part which includes the first surface), which ensures that the upper part of the tray stack is not only supported but is, on the contrary, lifted and thereby releases the lowermost trays in the tray stack from the weight of the whole tray stack and the subsequent deformation. The linear and slanted oriented movement of the load alleviation unit in relation to the vertical plane and to dispensing direction ensures that it is possible to come correct in under the chosen tray's edge with the first surface in spite of the tray stack being closely packed and the edges of the tray stack's trays are thus difficultly available. The slanting and the movement upwards ensures that the mesh comes from below and in under the edge and thereby that the edge can lift without destroying this or the adjacent / underlying tray's edge.

When the load alleviation unit's first surface thus during the translational movement of this and where the surface is moved slanted from below and up opposite placed the dispensing direction and slanted in relation to this, the tray will, which is placed right above the load alleviation unit, and the on it resting additional trays in the uppermost part of the tray stack, slide upwards during the continued translational movement. This continues until the first surface has reaches its movement top point, where the uppermost part of the tray stack is lifted maximally. Subsequently, the tray stack slides down when the first surface is moved translationally / linearly down meaning when it is moved slanted downwards in direction towards the dispensing direction, but angled in relation to it. When the tray stack is no longer lifted and the first surface has released its contact against the tray, the load alleviation unit's interaction with the tray stack is stopped.

When the load alleviation unit thus no longer interacts with the mentioned tray and thereby supports the uppermost part of the tray stack, the uppermost part of the tray stack will rest on the lowermost part of the tray stack since there at this time is no need for load alleviation.

The load alleviation unit's function is synchronized with the tray divider's function. It is thus significant that the load alleviation unit, during its translational movement, goes in mesh with the tray stack before the tray stack's mesh, which is ensured by the two components being a part of the same unit and are technically speaking placed on the rotating axle, where the first surface's, and the tray divider's respective active components' activity and placement are adapted to each other.

By the temporal displacement between the first surface's action and the tray divider's action it is achieved that the first surface "reaches" a position where it can go in mesh with the tray stack earlier than the front edge of the tray divider's active component "reaches" a mesh position.

By this temporal displacement, it is ensured that the uppermost part of the tray stack is lifted during the load alleviation unit's mesh before the tray divider's mesh and the tray divider's mesh can thereby occur on a load alleviated lower part of the tray stack, which is accordingly free of elastic deformation.

Furthermore, it is noted that known methods for load alleviation of a tray stack use separate electric actuator or pneumatic cylinders and associated mechanics, which have to be controlled very precisely in relation to the tray divider.
Contrary to this, the dispensing device includes, according to the invention, only one extra component consisting of the load alleviation unit and is therefore much more simple with higher reliability and lower price than the known technology.
The invention is especially suited for handling stacks of trays where the trays' edges are very closely packed and a precise point of application from the load alleviation unit is therefore necessary.

In an additionally preferred embodiment, according to claim 2, the at least part of the load alleviation unit includes a slanted pin in whose one end the first surface is placed, which pin is slanted with the gradient V1 such that the pin's center line and the dispensing direction form the angle V1.
Hereby is achieved a simple way of providing the active part of the load alleviation unit and where it is ensured that there is space for the component and that it can get in under a tray edge without damaging it.

In a further preferred embodiment, according to claim 3, the load alleviation unit includes a holder, in which the pin, including the first surface, is fixed.
The pin is hereby replaceable and the holder can be adjusted according to which tray type is desired to be dispensed, whereby the angle V1 is changed.
A friction bearing is mounted on the protruding pin such that is slides more easily and with a minimum of friction in the track.
In an additionally preferred embodiment, according to claim 4, the first surface is shaped as a plane surface or includes a, in relation to the load alleviation unit, slanted part.

Hereby, the contact surface against the tray edge can be adjusted when the first surface is a removable part. Alternatively, it is the whole pin, which is changed with a pin which has an alternative shape on the first surface. The first surface is appropriately the end surface of the pin but could in principle also be a protruding part on the pin placed in distance to the pin's end surface. The pin is appropriately shaped as a cylindrical pin.

In an additionally preferred embodiment, according to claim 5, the tray divider includes a circular disc shaped center part with a radius R1 and that the protrusion is placed in its periphery including a first circle shaped section with a radius R2 different from R1 and another circle shaped section with a radius R3 different from R1 and R2, which first circle shaped section and other circle shaped section are placed in a part of the cylindrical center part's periphery and in extension of each other.
By designing the tray divider as stated it is among others achieved that it can get in under the edge of the other lowermost tray without damaging it. Thereafter, the other part of the overhang, namely the other circle shaped section which as seen hoes deeper in, can just enter the distance further in between the two lower trays since the first circle shaped section has ensured giving the necessary work space.

In an additionally preferred embodiment, according to claim 6, the first circle shaped section includes a first front edge designed to go in mesh with an edge on the next to lowermost tray, which first front edge limits a first skid with a first slope, which is slanted in relation to the dispensing direction and that the other circle shaped section includes another front edge designed to go in mesh with the same tray, which other front edge at least partially limits a, for the other circle shaped section belonging other skid with another slope slanted in relation to the dispensing direction, which other slope is opposing the first slope.
The respective skids ensure that by the continued rotation of the tray divider, the distance between the lowermost tray and the next to lowermost tray becomes increased and thereby the adherence between the two trays is broken and the lowermost tray can be released.

In an additionally preferred embodiment, according to claim 7, the first circle shaped section also includes a mostly horizontal plateau and mostly perpendicular placed in relation to the dispensing direction, which plateau is placed between the first and the other skid.

In an additionally preferred embodiment, according to claim 8, the dispensing device includes at least 3 dispensing units, preferably at least 4 dispensing units, which operate synchronously.
Hereby, the trays' edges are supported and effected evenly such that a distortion does not occur.

In an additionally preferred embodiment, the first surface is a mostly plane and circular surface, which surface is positioned in an angle of 70 - 90 degrees preferably around 90 degrees in relation to the pin's center line.

In an additionally preferred embodiment, the first surface is a mostly plane and polygonal surface, which surface is at least partially placed in an angle of 70 - 90 degrees, preferably around 90 degrees in relation to the pin's center line.

In an additionally preferred embodiment, the dispensing unit includes a distance giver.

In an additionally preferred embodiment, the dispensing unit includes a distance giver, which distance giver includes a horizontal surface and a rotor with protruding blades and centered around a part of the rotating axle and placed between the track and the tray divider.

In an additionally preferred embodiment, the pin including the first surface is slanted with a gradient V1 in relation to the dispensing direction in the angle interval 5-45 degrees, preferably 5-20 degrees, additionally preferred 10-15 degrees. Dispensing device is especially useful for dispensing of trays, which are used for foodstuffs.
Dispensing device is especially useful for dispensing of trays, which are designed in a plastic foil or in metal foil including aluminum foil.

The invention will now be explained more fully with reference to the drawing, where
Fig. 1 shows a dispensing device according to the invention
Fig. 2 shows a perspective view of a preferred embodiment example of a load alleviation unit according to the invention
Fig. 3a-e show a dispensing device according to the invention and its function.
Fig. 4 shows, in perspective, a tray divider for use in a dispensing device according to the invention
Fig. 5 shows a plane geometry of the in fig. 4 shows load alleviation unit
Fig. 6a-c show the tray divider and the dispensing device according to the invention and where the load alleviation unit is left out for the sake of clarity.

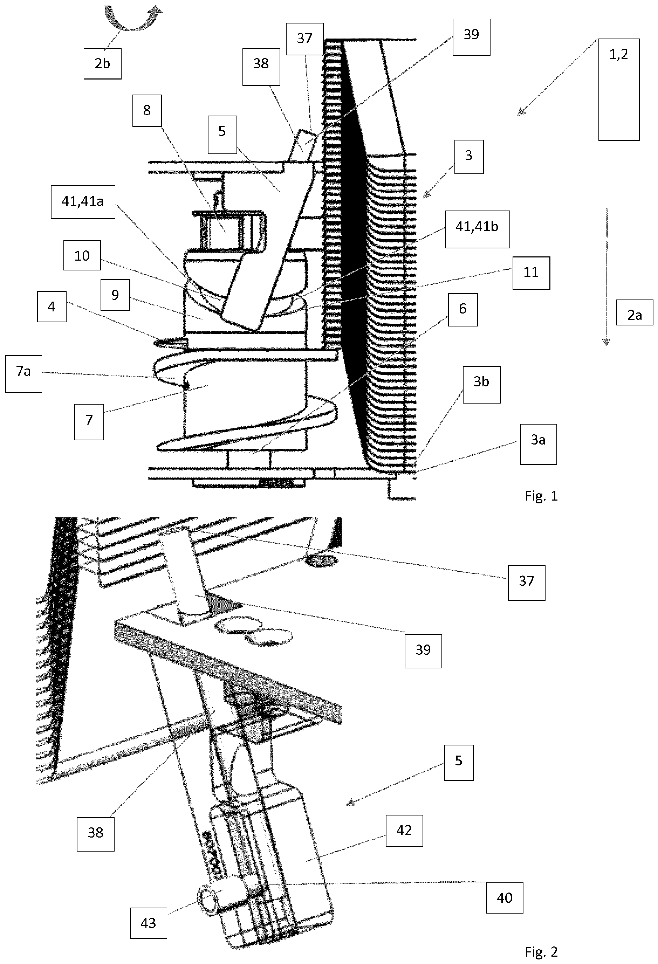

In fig. 1 is with 1 indicated shown dispensing device 1 according to the invention. The dispensing device 1 includes at least one dispensing unit 2 for dispensing of trays from a tray stack 3.

At the beginning of a dispensing cycle, the tray stack 3 stands on top of a distance giver 7 alternatively a tray divider 4, since the tray stack 3 rests on the lowermost tray 3a in the tray stack 3.

A slanted load alleviation unit 5, mounted on a rotational axle 6 is at this time not in mesh with the tray stack 3.
The tray stack 3 cannot balance on a corner of the tray stack 3, wherefore one typically uses several dispensing units 2, typically 3 or 4. These also, in combination, serve the purpose of fixating the tray stack's 3 position in the horizontal plane. A toothed belt (not shown) pulls on a driving wheel 8 and ensures synchronous movement of the dispensing units. An arrow 2b shows rotational direction.

The tray stack 3 can weigh up to 5 kg and this results in elastic deformation of the lowermost trays, including the lower tray 3a and the next to lowermost tray 3b to such a degree that the tray divider 4 cannot go correctly in mesh with the tray stack 3 between the lowermost tray 3a and the next to lowermost tray 3b unless there occurs a load alleviation of the weight.
Dispensing direction is indicated by 2a.

The dispensing unit includes the rotating vertical axle 6, around which the distance giver 7 is centered. The distance giver 7 is designed as a rotor with protruding blades 7a and centered around a part of the rotating axle. A center part 9 encloses a track 10, which runs around the cylindrical center part in a closed ring including partial tracks 41 including a slanted partial track 41a angled in relation to the dispensing direction 2a and another slanted partial track 41b. The track 10 is placed above the distance giver 7 and between which the tray divider is placed. The slanted tracks 41 are connected by mostly horizontal partial tracks 11. The dispensing unit 2 also includes the load alleviation unit 5, which with a protruding pin 40, see fig. 2, in the load alleviation unit's one end grips into the track 10. By rotation of the axle 6 and the center part 9, rotational direction indicated by an arrow, the load alleviation unit 5 will be moved up/down as a result of the track's 10 placement and direction.

Fig. 2 shows a perspective image of a preferred embodiment for a load alleviation unit 5 according to the invention.
In the load alleviation unit's 5 end 39 opposite where the protruding pin 40 is placed, it includes a slanted pin 38, which uppermost ends with a first surface 37, which is the surface, which presses against a tray edge during the device's function and as it will be explained below.
The tray divider 4 is placed in distance to the first surface 37. The pin 38 is in the shown example circular in style, but could also take other cross sectional shapes such as oval or polygonal. The pin 38 is placed in a holder 42, but could be one item. The holder 42 can adjust the length of the pin 38 placed in the holder 42. The protruding pin 40 has appropriately mounted a friction bearing 43, which has contact in the track 10. The other surface 37 is in the shown example circular and plane, but could include a replaceable plate part, which can have appropriate shapes and angles depending on and adapted to the tray stack 3, which it must go in mesh with.

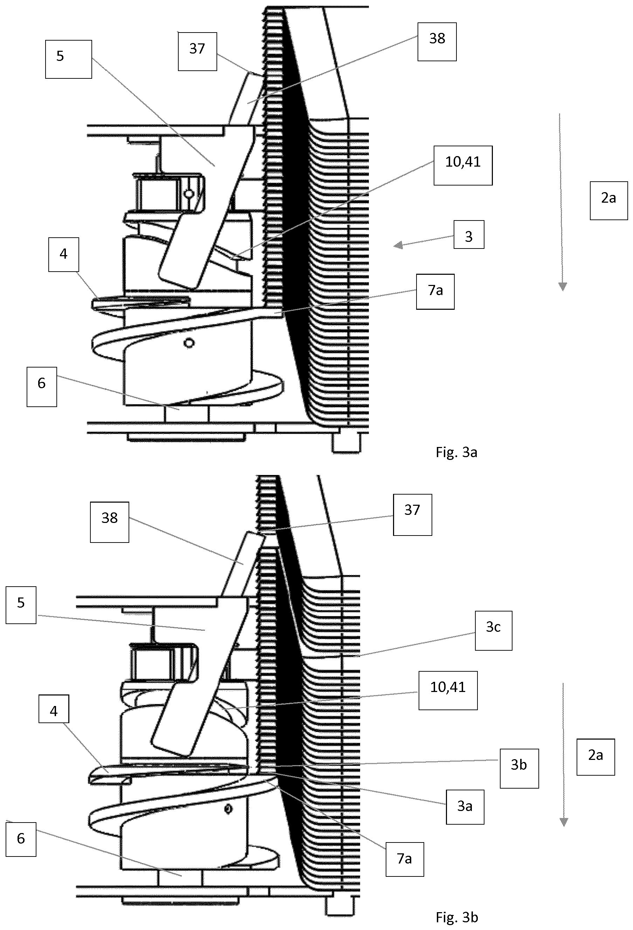

In fig. 3a is shown the next step in the dispensing cycle. During rotation of the rotational axle 6 occurs a displacement of the load alleviation unit 5, which is displaced from its bottom position (first outer position), as there is shown on fig. 1 to a position, where the load alleviation unit's 5 first surface 37 travels up towards the tray stack 3. The pin 38 is forced up as a result of the protruding pin's 40 placement in the track 10. The pin 38 is placed in the holder 42 and can be changed and the holder's 42 angle can be adjusted. At the same time, the tray divider 4 is also, as a result of the rotational axle's 6 rotation, rotated closer to the stack's lower trays with its active component, as it will be described later.

Fig. 3b shows that the holder 42 and thereby the pin 38 are displaced further upwards in the slanted part of the track 10,41, as a result of the continued rotation of the axle 6, shortly before the tray divider 4 goes in between the lowermost 3a and next to lowermost tray 3b, the pin 38 has reached about 95% of its highest position. The load alleviation allows that the lowermost trays have space to be springy, so the lowermost tray 3a has always got the same load. The tip of the pin 38, meaning the first surface 37, can be designed in relation to this in order to optimize the grip.

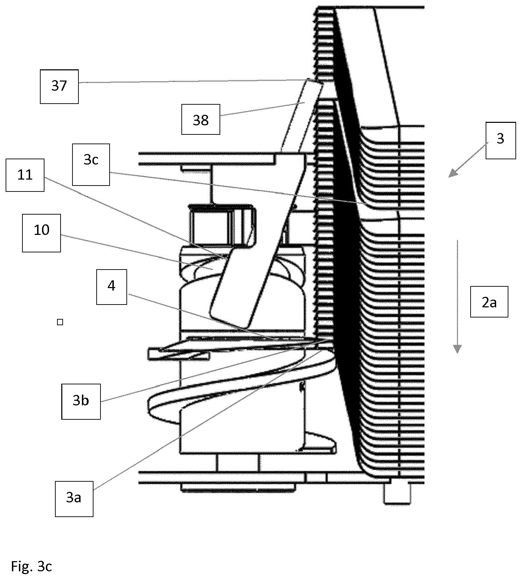

Fig. 3c shows the situation where the pin's 38 end surface, the first surface 37, has reached its top point, meaning its other outer position. The protruding pin 40 (is not seen on figure) is thus placed in the track 10 where this proceeds mostly horizontal 11. The first surface 37 thus grips in under a tray edge 3c and has lifted this and the trays, which lie above this free one, such that the load on the lower part of the tray stack 3 is reduced significantly. This occurs simultaneously with the tray divider 4 having moved itself further around and gone in mesh with the next to lowermost tray 3b and has begun to force the lowermost tray 3a free from the stack 3. The pin's center line forms an angle V1 (not shown) with the dispensing direction 2a.

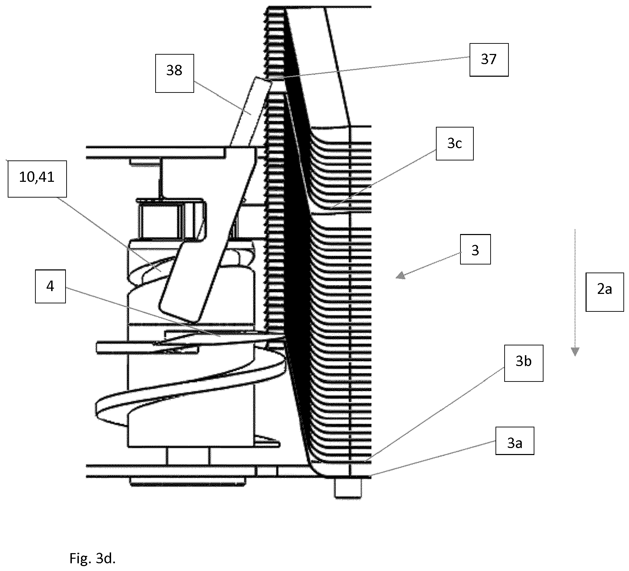

Fig. 3d shows that the pin 38 is on the way down again since the protruding pin 40 continues further in a slanted 41 part of the track 10. The slope of this is as low as possible in order to reduce friction and wear and to let go of the tray stack 3 as little as possible such that they are not pressed together.

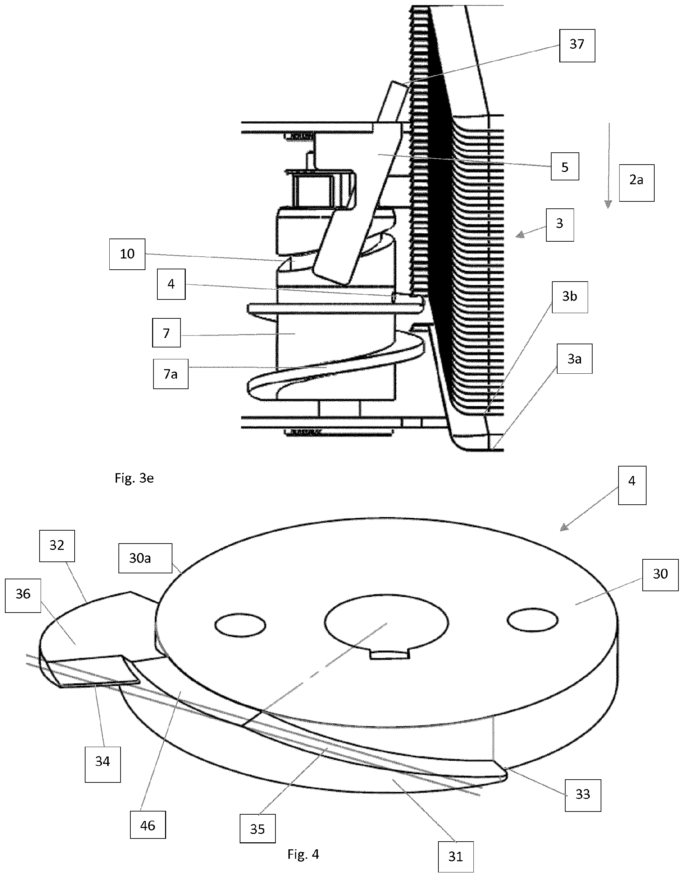

Fig. 3e shows that the load alleviation unit 5 continues downwards while the lowermost tray 3a is guided away by the distance giver's 7 rotor blade 7a, while the additional trays are on their way down the tray divider 4.

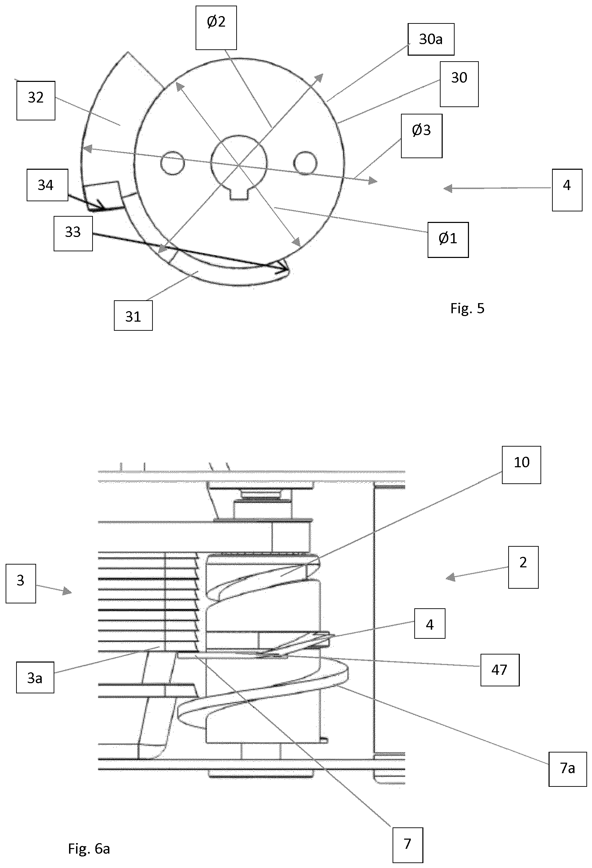

Fig. 4 shows, in perspective, a tray divider 4 for use in a dispensing device 1, according to the invention, and fig. 5 shows the same seen from above as plan drawing. The parallel lines show a slope.
The tray divider 4 includes a cylindrical center part 30 with a diameter Ø1 and radius R1. In its periphery 30 a is a first circular shaped section 31 with a diameter Ø2 and radius R2 different from R1 and another circle shaped section 32 with a diameter Ø3 and radius R3 differently placed from R1 and R2. The first circle shaped section 31 and other circle shaped section 32 are placed in a part of the cylindrical center part's 30 periphery 30a and are placed in continuation of each other. A preferred ration between the three mentioned radii are: R1: 30; R2: 35; R3: 45. The first circle shaped section 31 includes a first front edge 33 designed to go in mesh with an edge on the next to lowermost tray. The first front edge 33 limits a first skid 35 with a first slope, which is slanted in relation to the dispending direction and thus that when the tray divider 4 goes in mesh with the next to lowermost tray, the skid 35 will force this and the trays above upwards, since the angle is increasing in the rotational direction. The other circle shaped section 32 includes another front edge 34, which is designed to go in mesh with the same tray. The other front edge 34 limits at least partially a, for the other circle shaped section 32 belonging, other skid 36. The slope of this, the other slope, is also slanted in relation to the dispensing direction, but with a slope, which is opposite the first slope. Furthermore, the tray divider's first circle shaped section 31 includes a horizontal plateau 46, which is mostly perpendicular placed in relation to the dispensing direction 2a. The plateau is placed between first 35 and the other skids 36.

Fig. 6a-c shows the tray divider 4 and the dispensing device 1 according to the invention and where the load alleviator is left out for the sake of clarity. In fig. 6a is shown how the whole tray stack 3 with lower tray's edge rests on the distance giver 7, which is here shaped with a horizontal surface 47, which is an integrated part of the twisted rotor blade 7a proceeding twisted downwards, meaning in the same direction as dispensing direction and opposite the track's 10 placement. The track 10 and the rotor blade 7a are angled in the same direction, but with different angles. The tray divider 4 has not yet gone in mesh.

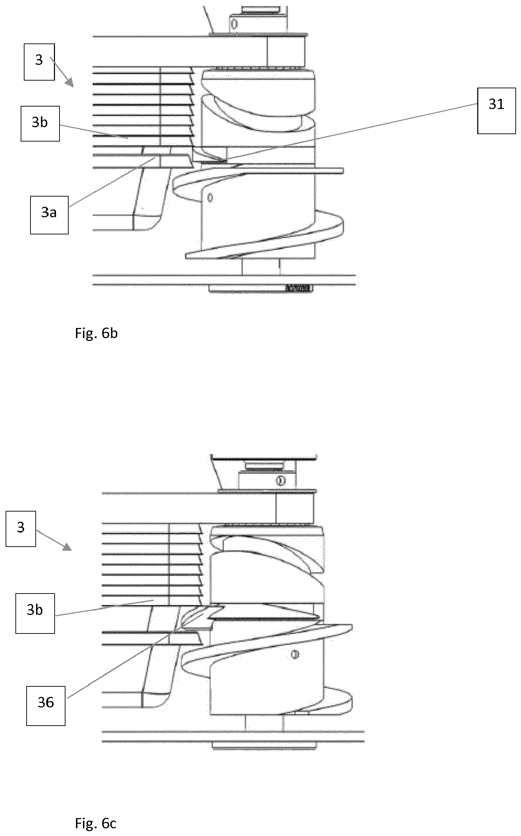

In fig. 6b, the dividing disc's 4 first circle shaped section 31 has gone in mesh with the lowermost 3a and next to lowermost tray 3b in the area between the two trays' edges, since the tray divider's 4 (there is also referred to figure 4) first front edge 33 is pressed in between the two trays' edges and the next to lowermost tray's edge will by rotation of the dispensing design 2 become led in over the first skid 35. Since its slope is upwards (opposite the dispensing direction), the tray stack will become lifted free of the lowermost tray 3a.
Thereafter, the other front edge 34 slides into the space and since this edge is placed further away from center of the tray divider 3, it cuts deeper into the space.
Thereafter, the edge of the next to lowermost tray 3b slides further in on the other skid 36, which slopes the opposite way than the first skid 35. Since it is placed so far into the space, the lowermost tray is forced down.
In fig. 6c it is shown that the other skid 36 is placed far into the space and that the tray stack 3, which includes next to lowermost tray 3b and the on top resting trays rest on the other skid 36, where they slide slowly down this whereby they are lowered downwards.

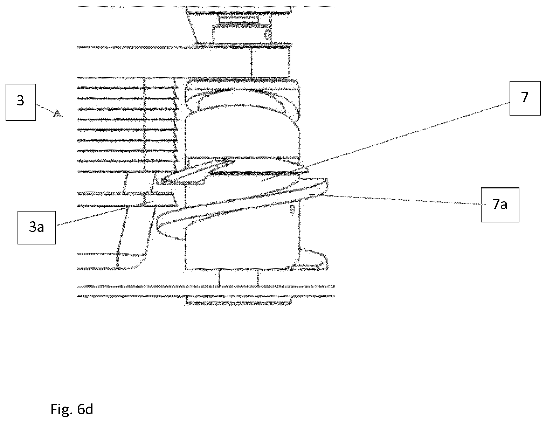

In fig. 6d, the whole tray stack is lowered and the lowermost tray becomes guided fully down by use of the distance giver 7, which hereby helps to have the lowermost tray 3a leave the tray stack in a guided and controlled way.
Alternatively, the tray could leave the stack totally by use of gravity. Hereafter, the dispensing unit 2 is ready for a new cycle.

### Reference numbers

- 1: Dispensing device
- 2: the dispensing unit
2a the dispensing direction
- 3: tray stack
3a Lowermost tray
3b next to lowermost tray
3c other tray which is lifted by load alleviator
- 4: tray divider
- 5: t load alleviation unit
- 6: rotational axle
- 7: distance giver (consisting of a rotor with blades)
7a blades
- 8: driving wheel
- 9: center part of 2
- 10: track
- 11: track's horizontal plane
- 30: center part
30a center part's periphery
- 31: first circle shaped section
- 32: other circle shaped section
- 33: first front edge
- 34: other front edge
- 35: first skid
- 36: other skid
- 37: first surface
- 38: slanted pin
- 39: slanted pin's one end
- 40: protruding stud
- 41: track's slanted parts
- 42: holder
- 43: friction bearing
- 46: Horizontal plateau
- 47: horizontal surface

## Claims

1. Dispensing device (1) for dispensing of trays from a tray stack (3) in a predetermined dispensing direction (2a), where the dispensing device (1) includes at least one dispensing unit (2), which is designed for repeated dispensing of one tray at a time and the dispensing unit (2) includes:
- a rotational axle (6) with a rotational direction on which is mounted:
- a driving wheel (8) for rotating rotational axle (6),
- a tray divider (4) which rotates with rotational axle (6), which includes at least one overhang, which overhang during rotation faces towards the tray stack (3) and interacts with a lowermost (3a) and next to lowermost tray (3b) in the tray stack (3),
- and that there on the rotational axle (6) is additionally mounted a load alleviation unit (5) in a distance from the tray divider (4) and in direction opposite the direction of dispensing (2a), which load alleviation unit (5) includes a first surface (37) designed to relieve a part of the tray stack, and that at least a part of the load alleviation unit (5) is slanted in relation to the predetermined dispensing direction (2a) with a gradient V1, and where the first surface (37) is placed on the part of the load alleviation unit (5), which is slanted and is furthest the tray divider (4) in direction opposite the dispensing direction (2a) and facing towards the tray stack (3) that the dispensing device (1) includes items, by which the load alleviation unit's (5) first surface (37) is designed to be moved, and by which movement the surface (37) goes in mesh with another tray (3c) in the tray stack (3) for load alleviation of trays placed in front of the other tray (3c) in the dispensing direction (2a) and that the load alleviation unit (5) and the tray divider (4) work synchronously such that the first surface (37) takes an outer position furthermost away from the tray divider (4) when the tray divider (4) has gone in mesh between the lowermost (3a) and the next to lowermost tray (3b) in the tray stack (3) **characterized in that** the movement of the load alleviation unit's (5) first surface (37) is in a linear straight line in the slanted direction of the at least part of the load alleviations unit (5), and **in that** the load alleviation unit (5) includes, in the area opposite the first surface (37), a protruding pin (40), which protruding pin (40) goes in mesh with an around going track (10) placed in a center part (9) of the dispensing unit (2), and the track (19) includes slanted parts (41) in relation to the axle's center line, which center part (9) rotates with the axle's (6) rotation, by which rotation the first surface (37) takes two outer positions: a first position and another position.

2. Dispensing device (1) according to claim 1 **characterized in that** the at least part of the load alleviation unit (5) includes a slanted pin (38) in whose one end (39) the first surface (37) is placed, which pin is slanted with the gradient V1 such that the pin's center line and the dispensing direction (2a) form the angle V1.

3. Dispensing device (1) according to claim 2 **characterized in that** the load alleviation unit (5) includes a holder (42) in which the pin (38) including the first surface (37) is fixed.

4. Dispensing device (1) according to any of the previous claims **characterized in that** the first surface (37) is shaped as a plane surface or includes a, in relation to the load alleviation unit (5), slanted part.

5. Dispensing device (1) according to any of the previous claims **characterized in that** the tray divider (4) includes a circular disc shaped center part (30) with a radius R1 and that the protrusion is placed in its periphery including a first circle shaped section (31) with a radius R2 different from R1 and another circle shaped section (32) with a radius R3 different from R1 and R2, which first circle shaped section (31) and other circle shaped section (32) are placed in a part of the disc shaped center part's (30) periphery (30a) and in extension of each other.

6. Dispensing device (1) according to claim 5 **characterized in that** the first circle shaped section (31) includes a first front edge (33) designed to go in mesh with an edge on the next to lowermost tray (3b), which first front edge (33) limits a first skid (35) with a first slope, which is slanted in relation to the dispensing direction (2a) and that the other circle shaped section (32) includes another front edge (34) designed to go in mesh with the same tray (3b), which other front edge (34) at least partially limits a, for the other circle shaped section (32) belonging other skid (36) with another slope slanted in relation to the dispensing direction (2a), which other slope is opposing the first slope.

7. Dispensing device (1) according to claim 5 or 6 **characterized in that** the first circle shaped section (31) also includes a mostly horizontal plateau (46) and mostly perpendicular placed in relation to the dispensing direction (2a), which plateau (46) is placed between the first (35) and the other skid (36).

8. Dispensing device (1) according to any of the previous claims **characterized in that** the dispensing device (1) includes at least 3 dispensing units (2), preferably at least 4 dispensing units (2), which operate synchronously.

## Patentansprüche

1. Ausgabevorrichtung (1) zum Ausgeben von Tabletts von einem Tablettstapel (3) in eine vorbestimmte Ausgaberichtung (2a), wobei die Ausgabevorrichtung (1) mindestens eine Ausgabeeinheit (2) beinhaltet, die zum wiederholten Ausgeben jeweils eines Tabletts auf einmal entworfen ist und wobei die Ausgabeeinheit (2) beinhaltet:
- eine Drehachse (6) mit einer Drehrichtung, auf der Folgendes montiert ist:
- ein Antriebsrad (8) zum Drehen einer Drehachse (6),
- einen sich mit einer Drehachse (6) drehenden Tablettverteiler (4), der mindestens einen Überhang beinhaltet, wobei der Überhang während der Drehung dem Tablettstapel (3) zugewandt ist und mit einem untersten (3a) und zweituntersten Tablett (3b) im Tablettstapel (3) zusammenwirkt,
- und, dass zusätzlich auf der Drehachse (6) eine Entlastungseinheit (5) in einem Abstand vom Tablettverteiler (4) und in eine Richtung, die der Richtung der Ausgabe (2a) entgegengesetzt ist, montiert ist, wobei die Entlastungseinheit (5) eine erste Fläche (37) beinhaltet, die entworfen ist, um einen Teil des Tablettstapels zu entlasten, und dass mindestens ein Teil der Entlastungseinheit (5) in Bezug zur vorbestimmten Ausgaberichtung (2a) mit einem Gradienten V1 abgeschrägt ist, und wobei die erste Fläche (37) auf dem Teil der Entlastungseinheit (5) platziert wird, der abgeschrägt ist und am weitesten vom Tablettverteiler (4) in eine Richtung entfernt ist, die der Ausgaberichtung (2a) entgegengesetzt ist und dem Tablettstapel (3) zugewandt ist, dass die Ausgabevorrichtung (1) Objekte beinhaltet, wobei die erste Fläche (37) der Entlastungseinheit (5) entworfen ist, durch sie bewegt zu werden, und wobei durch ihre Bewegung die Fläche (37) mit einem anderen Tablett (3c) im Tablettstapel (3) zur Entlastung von vor dem anderen Tablett (3c) in der Ausgaberichtung (2a) platzierten Tabletts, im Eingriff ist und, dass die Entlastungseinheit (5) und der Tablettverteiler (4) synchron arbeiten, so dass die erste Fläche (37) eine äußere Position einnimmt, die am weitesten vom Tablettverteiler (4) entfernt ist, wenn der Tablettverteiler (4) zwischen dem untersten (3a) und dem zweituntersten Tablett (3b) im Tablettstapel (3) im Eingriff ist, **dadurch gekennzeichnet, dass** die Bewegung der ersten Fläche (37) der Entlastungseinheit (5) in einer linearen geraden Linie in der abgeschrägten Richtung des mindestens einen Teils der Entlastungseinheit (5) erfolgt,
und dadurch, dass die Entlastungseinheit (5) in dem Bereich, der der ersten Fläche (37) entgegengesetzt ist, einen hervorstehenden Stift (40) beinhaltet, wobei der hervorstehende Stift (40) mit einer umlaufenden Schiene (10) im Eingriff ist, die in einem mittleren Teil (9) der Ausgabevorrichtung (2) platziert ist, und wobei die Schiene (19) abgeschrägte Teile (41) in Bezug zur Mittellinie der Achse beinhaltet, wobei sich der mittlere Teil (9) mit der Drehung der Achse (6) dreht, wobei durch die Drehung die erste Fläche (37) zwei äußere Positionen einnimmt: eine erste Position und eine andere Position.

2. Ausgabevorrichtung (1) nach Anspruch 1, **dadurch gekennzeichnet, dass** der mindestens Teil der Entlastungseinheit (5) einen abgeschrägten Stift (38) beinhaltet, in dessen einem Ende (39) die erste Fläche (37) platziert wird, wobei der Stift mit dem Gradienten V1 so abgeschrägt ist, dass die Mittellinie des Stifts und die Ausgaberichtung (2a) den Winkel V1 ausbilden.

3. Ausgabevorrichtung (1) nach Anspruch 2, **dadurch gekennzeichnet, dass** die Entlastungseinheit (5) einen Halter (42) beinhaltet, in dem der Stift (38) einschließlich der ersten Fläche (37) fixiert ist.

4. Ausgabevorrichtung (1) nach einem der vorhergehenden Ansprüche, **dadurch gekennzeichnet, dass** die erste Fläche (37) als eine ebene Fläche geformt ist oder in Bezug zur Entlastungseinheit (5) einen abgeschrägten Teil beinhaltet.

5. Ausgabevorrichtung (1) nach einem der vorhergehenden Ansprüche, **dadurch gekennzeichnet, dass** der Tablettverteiler (4) einen runden scheibenförmigen mittleren Teil (30) mit einem Radius R1 beinhaltet und dass der Vorsprung in seinem Umfang platziert wird, der einen ersten kreisförmigen Abschnitt (31) mit einem Radius R2, der unterschiedlich von R1 ist, und einen anderen kreisförmigen Abschnitt (32) mit einem Radius R3 beinhaltet, der unterschiedlich von R1 und R2 ist, wobei der erste kreisförmige Abschnitt (31) und der andere kreisförmige Abschnitt (32) in einem Teil des Umfangs (30a) des scheibenförmigen mittleren Teils (30) und in Erweiterung voneinander platziert werden.

6. Ausgabevorrichtung (1) nach Anspruch 5, **dadurch gekennzeichnet, dass** der erste kreisförmige Abschnitt (31) eine erste Vorderkante (33) beinhaltet, die entworfen ist, um mit einer Kante auf dem zweituntersten Tablett (3b) einzugreifen, wobei die erste Vorderkante (33) eine erste Kufe (35) mit einem ersten Abhang begrenzt, die in Bezug zur Ausgaberichtung (2a) abgeschrägt ist und dadurch, dass der andere kreisförmige Abschnitt (32) eine andere Vorderkante (34) beinhaltet, die entworfen ist, um mit dem gleichen Tablett (3b) einzugreifen, wobei die andere Vorderkante (34) mindestens zum Teil einen kreisförmigen Abschnitt (32) begrenzt, der zur anderen Kufe (36) gehört, wobei ein anderer Abhang in Bezug zur Ausgaberichtung (2a) abgeschrägt ist, wobei der andere Abhang dem ersten Abhang entgegengesetzt ist.

7. Ausgabevorrichtung (1) nach Anspruch 5 oder 6, **dadurch gekennzeichnet, dass** der erste kreisförmige Abschnitt (31) auch ein größtenteils horizontales Plateau (46) beinhaltet und das größtenteils senkrecht in Bezug zur Ausgaberichtung (2a) platziert ist, wobei das Plateau (46) zwischen der ersten (35) und der anderen Kufe (36) platziert ist.

8. Ausgabevorrichtung (1) nach einem der vorhergehenden Ansprüche, **dadurch gekennzeichnet, dass** die Ausgabevorrichtung (1) mindestens 3 Ausgabeeinheiten (2), vorzugsweise mindestens 4 Ausgabeeinheiten (2) beinhaltet, die synchron betrieben werden.

## Revendications

1. Dispositif de distribution (1) permettant la distribution de plateaux à partir d'un empilement de plateaux (3) selon une direction de distribution prédéfinie (2a), ledit dispositif de distribution (1) comprenant au moins une unité de distribution (2), qui est conçue pour une distribution répétée d'un plateau à la fois et ladite unité de distribution (2) comprenant :
- un axe de rotation (6) avec un sens de rotation sur lequel est monté :
- une roue d'entraînement (8) pour la rotation de l'axe de rotation (6),
- un diviseur de plateaux (4) qui tourne avec l'axe de rotation (6), qui comprend au moins un surplomb, ledit surplomb durant la rotation faisant face vers l'empilement de plateaux (3) et interagissant avec le plateau le plus bas (3a) et celui juste à côté (3b) du plateau le plus bas dans l'empilement de plateaux (3),
- et **caractérisé en ce que** sur l'axe de rotation (6), est montée également une unité d'allégement de charge (5) à une distance du diviseur de plateaux (4) et selon une direction opposée à la direction de distribution (2a), ladite unité d'allégement de charge (5) comprenant une première surface (37) conçue pour soulager une partie de l'empilement de plateaux et **en ce qu'**au moins une partie de l'unité d'allégement de charge (5) est inclinée par rapport à la direction de distribution prédéfinie (2a) avec un gradient V1, et ladite première surface (37) étant placée sur la partie de l'unité d'allégement de charge (5) qui est inclinée et est la plus éloigné du diviseur de plateaux (4) selon la direction opposée à la direction de distribution (2a) et faisant face vers l'empilement de plateaux (3) ledit dispositif de distribution (1) comprenant des articles au moyen desquels la première surface (37) de l'unité d'allégement de charge (5) est conçue pour être déplacée et par ledit déplacement, ladite surface (37) vient s'engrener avec un autre plateau (3c) dans l'empilement de plateaux (3) pour l'allègement de la charge des plateaux placés en tête de l'autre plateau (3c) selon la direction de distribution (2a) et **en ce que** l'unité d'allégement de charge (5) et le diviseur de plateaux (4) travaillent de façon synchrone de sorte que la première surface (37) prenne une position externe la plus éloignée du diviseur de plateaux (4) lorsque le diviseur de plateaux (4) vient s'engrener entre le plateau le plus bas(3a) et celui juste à côté (3b) du plateau le plus bas dans l'empilement de plateaux (3) **caractérisé en ce que** le déplacement de la première surface (37) de l'unité d'allègement de charge (5) est dans une ligne droite linéaire selon la direction inclinée de la au moins une partie de l'unité d'allégement de charge (5) et **en ce que** l'unité d'allégement de charge (5) comprend dans la zone opposée à la première surface (37), une broche faisant saillie (40), ladite broche faisant saillie (40) venant s'engrener avec un chemin faisant le tour (10) placé dans une partie centrale (9) de l'unité de distribution (2), et le chemin (19) comprenant des parties inclinées (41) par rapport à la ligne centrale de l'axe, ladite ligne centrale (9) tournant avec la rotation de l'axe (6), par ladite rotation ladite première surface (37) prenant deux positions externes : une première position et une autre position.

2. Dispositif de distribution (1) selon la revendication 1, **caractérisé en ce que** la au moins une partie de l'unité d'allègement de charge (5) comprend une broche inclinée (38), dans une extrémité (39) de celle-ci, la première surface (37) est placée, ladite broche étant inclinée avec le gradient V1 de sorte que la ligne centrale de la broche et la direction de distribution (2a) forme l'angle V1.

3. Dispositif de distribution (1) selon la revendication 2, **caractérisé en ce que** l'unité d'allégement de charge (5) comprend un support (42) dans lequel la broche (38) comprenant la première surface (37) est fixée.

4. Dispositif de distribution (1) selon l'une quelconque des revendications précédentes, **caractérisé en ce que** la première surface (37) est façonnée sous la forme d'une surface plane ou comprenant une partie inclinée par rapport à l'unité d'allégement de charge (5).

5. Dispositif de distribution (1) selon l'une quelconque des revendications précédentes, **caractérisé en ce que** le diviseur de plateaux (4) comprend une partie centrale en forme de disque circulaire (30) avec un rayon R1 et **en ce que** la saillie est placée dans sa périphérie comprenant une première section en forme de cercle (31) avec un rayon R2 différent de R1 et une autre section en forme de cercle (32) avec un rayon R3 différent de R1 et R2, ladite première section en forme de cercle (31) et ladite autre section en forme de cercle (32) étant placées dans une partie de la périphérie (30a) de la partie centrale en forme de disque (30) et en extension l'une par rapport à l'autre.

6. Dispositif de distribution (1) selon la revendication 5, **caractérisé en ce que** la première section en forme de cercle (31) comprend un premier bord avant (33) conçu pour aller s'engrener avec un bord sur le plateau juste à côté (3b) de celui le plus bas, ledit premier bord avant (33) limitant un premier patin (35) avec une première pente qui est inclinée par rapport à la direction de distribution (2a) et **en ce que** l'autre section en forme de cercle (32) comprend un autre bord avant (34) conçu pour aller s'engrener avec le même plateau (3b), ledit autre bord avant (34) limitant au moins partiellement un autre patin (36) appartenant à l'autre section en forme de cercle (32) avec une autre pente inclinée par rapport à la direction de distribution (2a), ladite autre pente s'opposant à la première pente.

7. Dispositif de distribution (1) selon la revendication 5 ou 6, **caractérisé en ce que** la première section en forme de cercle (31) comprend également un plateau généralement horizontal (46) et placé en général perpendiculairement par rapport à la direction de distribution (2a), ledit plateau (46) étant placé entre le premier patin (35) et l'autre patin (36).

8. Dispositif de distribution (1) selon l'une quelconque des revendications précédentes, **caractérisé en ce que** le dispositif de distribution (1) comprend au moins 3 unités de distribution (2), de préférence au moins 4 unités de distribution (2) qui fonctionnent de façon synchrone.
